# EUROPÄISCHE PATENTSCHRIFT

(11) **EP 0 683 064 B1**
(45) Veröffentlichungstag und Bekanntmachung des Hinweises auf die Patenterteilung: **10.06.1998**
(21) Anmeldenummer: 95105078.0
(22) Anmeldetag: 05.04.1995
(51) Int. Cl.: B60J 1/16, E05D 15/10

(54) **Fahrzeugschiebefenster**
Sliding window for vehicle
Fenêtre glissante pour véhicule

(30) Priorität: 16.05.1994 DE 4416827; 17.05.1994 DE 4416827
(43) Veröffentlichungstag der Anmeldung: 22.11.1995
(73) Patentinhaber: Schade GmbH & Co. KG, 58840 Plettenberg (DE)
(72) Erfinder: Dancasiu, Michael, D-42105 Wuppertal (DE); Strunk, Harald, D-58840 Plettenberg (DE); Schulte, Martin, D-58802 Balve (DE)

(56) Entgegenhaltungen:
- EP-A- 0 445 685
- CH-A- 342 483
- DE-A- 3 803 342
- US-A- 4 295 306

## Beschreibung

Die Erfindung betrifft ein Fahrzeugschiebefenster, das in eine Öffnung von Seitenteilen einer Fahrzeugkarosserie und/oder in die Fahrzeugtüren einsetzbar ist, wobei das Fahrzeugschiebefenster zwei in der Schließlage zueinander in einer Ebene fluchtend stehende Scheiben aufweist und die in Vorwärtsfahrtrichtung vordere Scheibe um eine vertikale oder leicht gegen die Vertikale geneigte Achse nach außen ausstellbar ist.

Bei Fahrzeugen sind Ausstellfenster bekannt, die um eine vertikale oder um eine leicht gegen die Vertikale geneigte Achse verschwenkbar sind. Diese Fenster werden vielfach dann eingesetzt, wenn es sich um einen zweitürigen Personenkraftwagen handelt. Die Schwenkachse solcher Ausstellfenster liegt im Bereich der in Vorwärtsfahrtrichtung gesehen vorderen Kante der Fenster. An der gegenüberliegenden, in Fahrtrichtung hinteren Kante ist ein geeigneter Ausstellbeschlag vorgesehen, um das Fenster nach außen auszustellen. Auch sind Fenster bekannt, deren Scheiben mittels eines Fensterheberantriebes in vertikaler Richtung auf- und abbewegbar sind. Solche Fenster sind für die Türen eines Fahrzeugs ausgelegt. Sie werden üblicherweise bei mehrtürigen Personenkraftwagen eingesetzt. Bei Personenkraftwagen haben sich diese Möglichkeiten einzeln oder in Kombination seit langem bewährt.

Bei Omnibussen ist es außerdem bekannt, den oberen Teil der Verglasung als Schiebeelemente auszubilden, um den Innenraum zu belüften. Von dieser Möglichkeiten wird wegen der entstehenden Zugluft jedoch von den Fahrzeuginsassen weniger Gebrauch gemacht.

In neuerer Zeit sind sogenannte Großraumlimousinen verstärkt auf den Markt gekommen, die im Gegensatz zum normalen PKW mit Vorder- und Rücksitzen über mehrere hintereinander angeordnete Sitzreihen verfügen. Da der vordere Raum für den Fahrer und den Beifahrer häufig von der hinteren Zelle getrennt ist, muß dafür Sorge getragen werden, daß auch dieser Raum ausreichend belüftet werden kann. Dies ist mit den herkömmlichen zuvor beschriebenen Fenstern nicht möglich.

Aus der DE 38 03 342 A1 ist bereits eine Seitenscheibenanordnung für ein Kraftfahrzeug bekannt, bei der die in Fahrtrichtung vordere Scheibe um eine vertikale oder leicht gegen die Vertikale geneigte Achse nach außen ausstellbar ist. Nach dem Ausstellen kann dann die in Fahrtrichtung hintere Scheibe in Fahrtrichtung bzw. nach vorn verschoben werden, so daß sie neben der ausstellbaren Scheibe steht.

Bei dieser Ausführung ist es nachteilig, daß beide Scheiben beweglich sind, was einen sehr hohen konstruktiven Aufwand bedeutet, da für beide Scheiben entsprechend ausgelegte Beschläge notwendig sind. Außerdem ist diese bekannte Lösung nicht bedienungsfreundlich, da es notwendig ist, zur Erzielung einer gegenüber dem Lüftungsschlitz durch die ausgestellte Scheibe größeren Lüftungsöffnung beide Scheiben nacheinander zu bewegen. Dadurch entstehen zwangsläufig zwei Lüftungsöffnungen. Da es sich bei Fahrzeugschiefenstern um Massenprodukte handelt, werden kostengünstige Lösungen angestrebt, wobei die Einsparungen für ein einzelnes Bauteil, bezogen auf die gesamten Herstellkosten eines Fahrzeuges, gering sein können. Außerdem wird es als erstrebenswert angesehen, wenn die gesamte Lüftungsöffnung durch nur eine Scheibe erreicht werden kann.

Der Erfindung liegt ausgehend von einem durch die DE 38 03 342 A1 vorbekannten Stand der Technik die Aufgabe zugrunde, ein Fahrzeugschiebefenster zu schaffen, das in konstruktiv einfacher Weise die Möglichkeit bietet, daß ein Lüftungsschlitz wie bei den herkömmlichen Ausstellfenstern oder eine Lüftungsöffnung gebildet werden kann, wobei die Ebene der Glasscheiben in geschlossenem Zustand etwa mit der Ebene der Außenhaut der Karosserie im Fensterbereich zusammenfällt.

Diese Aufgabe wird gelöst, indem das Fahrzeugschiebefenster zwei in der Schließlage zueinander fluchtend stehende Scheiben aufweist, wobei die in Vorwärtsfahrtrichtung vordere Scheibe um eine vertikale oder leicht gegen die Vertikale geneigte Achse nach außen ausstellbar ist, während die in Fahrtrichtung hintere Scheibe ortsfest angeordnet ist, und wobei die vordere Scheibe derart verschiebbar angeordnet ist, daß sie in der Offenstellung zumindest bereichsweise seitlich neben der Außenseite der hinteren ortsfesten Scheibe steht.

Durch diese aufgezeigte Lösung nach der Erfindung wird die Möglichkeit geschaffen, daß die Fahrzeugscheibe nicht nur ausgestellt wird, sondern darüber hinaus, wenn das nicht ausreicht, auch zur Bildung einer zweiten sinngemäß vergrößerten Lüftungsöffnung verschoben werden kann.

In weiterer Ausgestaltung des Gegenstandes der Erfindung ist vorgesehen, daß das Fahrzeugschiebefenster durch die vordere und hintere Scheibe in der Schließlage der Scheiben symmetrisch oder asymmetrisch geteilt ist, wobei bei der asymmetrischen Teilung die Länge der in Vorwärtsfahrtrichtung hinteren Scheibe geringer ist als die vordere Scheibe. Dadurch läßt sich die Größe der Lüftungsöffnung in einfachster Weise variieren. Zweckmäßigerweise stehen bei der asymmetrischen Teilung des Schiebefensters die Längen der vorderen Scheibe zur hinteren Scheibe in einem Verhältnis von ca. 2:1. Dadurch ergeben sich konstruktiv besonders günstige Einbauverhältnisse, wenn die Scheiben nebeneinander stehen. Damit das Fahrzeugschiebefenster als vorgefertigte Einheit in eine Öffnung der Karosserie oder der Tür eingesetzt werden kann, ist vorgesehen, die Scheiben an einem in die Öffnung der Karosserie oder der Tür einsetzbaren äußeren Rahmen anzuordnen. Nach einem besonderen Ausführungsbeispiel besteht dieser Rahmen zweckmäßig aus Profilstäben geeigneten Querschnitts, so daß diese Stäbe gleichzeitig als Führung für die Verschiebung der jeweiligen Scheibe genutzt werden können. Damit beim Ausstellen der Scheibe der sich bildende Lüftungsschlitz in Vorvärtsfahrtrichtung hinten liegt, kann bei einer anderen Ausführungsform zweckmäßig vorgesehen sein, daß der in Fahrtrichtung vordere, vertikale Profilholm eines zusätzlich vorgesehenen Ausstellrahmens in wenigstens einer Lagerhülse gelagert ist. Die Mittellängsachse dieser Lagerhülse bildet dann die Schwenkachse. Zur einfachen und funktionssicheren Verschiebung der jeweiligen Scheibe ist vorgesehen, daß als Scheibenaufnahme eine vorzugsweise auf dem unteren horizontalen Profilholm hin und her verschiebbare Profilschiene vorgesehen ist. Dadurch wird die Anzahl der Bauteile auf einem Minimum gehalten, so daß das Fahrzeugschiebefenster als Ganzes sehr kompakt ist. Zweckmäßig ist am oberen und unteren Rand der verschiebbaren Scheibe jeweils eine Führungsschiene zugeordnet.

Weitere zum Teil sehr erfindungswesentliche Merkmale ergeben sich aus den Unteransprüchen 11 bis 24 und der nachstehenden Beschreibung.

Anhand der beiliegenden Zeichnungen wird die Erfindung nachstehend näher erläutert.

Es zeigen:
- **Fig. 1**:: eine Großraumlimousine mit einem andeutungsweise dargestellten, erfindungsgemäßen Fahrzeugschiebefenster,
- **Fig. 2**:: ein Fahrzeugschiebefenster nach dem Stand der Technik in der geschlossenen und geöffneten Stellung,
- **Fig. 3**:: das Fahrzeugschiebefenster gem. der Figur 2 im geöffneten Zustand in perspektivischer Darstellung,
- **Figuren 4 bis 6**:: das erfindungsgemäße Fahrzeugschiebefenster in drei verschiedenen Stellungen,
- **Fig. 7**:: das Fahrzeugschiebefenster gem. den Figuren 4 bis 6 im ausgestelltem Zustand in perspektivischer Darstellung,
- **Fig. 8**:: eine der Figur 7 entsprechende Darstellung jedoch im geöffneten Zustand,
- **Fig. 9**:: den aus Rundstäben bestehenden Rahmen, die Führungsschiene und die Scheiben in einer Explosivdarstellung einschließlich weiterer Bauteile,
- **Fig. 10:**: eine der Figur 9 entsprechende Darstellung, jedoch bei geschlossenen Scheiben,
- **Fig. 11**:: eine der Figur 10 entsprechende Darstellung mit geöffneten Scheiben,
- **Fig. 12:**: das Fenster entsprechend Figur 2 in teilweise geschnittener, perspektivischer Darstellung,
- **Fig. 13:**: das Fenster nach Fig. 12 in vergrößerter Darstellung des Verstell- und Schiebemechanismus aus dem Ausschnitt A von Fig. 12
- **Fig. 14:**: eine Querschnittsansicht nach dem Pfeil X aus Fig. 13,
- **Figuren 15 - 17:**: den Fenstermechanismus nach den Figuren 12 bis 14 in verschiedenen Zwischenstufen,
- **Fig. 18:**: eine abgewandelte Ausführungsform eines Verschiebe- und Ausstellmechanismus,
- **Fig. 19, 20:**: zwei Darstellungen ähnlich Fig. 13, jedoch mit einer weiteren Ausführung für einen Verschiebe- und Verstellmechanismus und
- **Fig. 21:**: eine Darstellung eines Ausstellmechanismus in einer weiter abgewandelten Ausführungsform

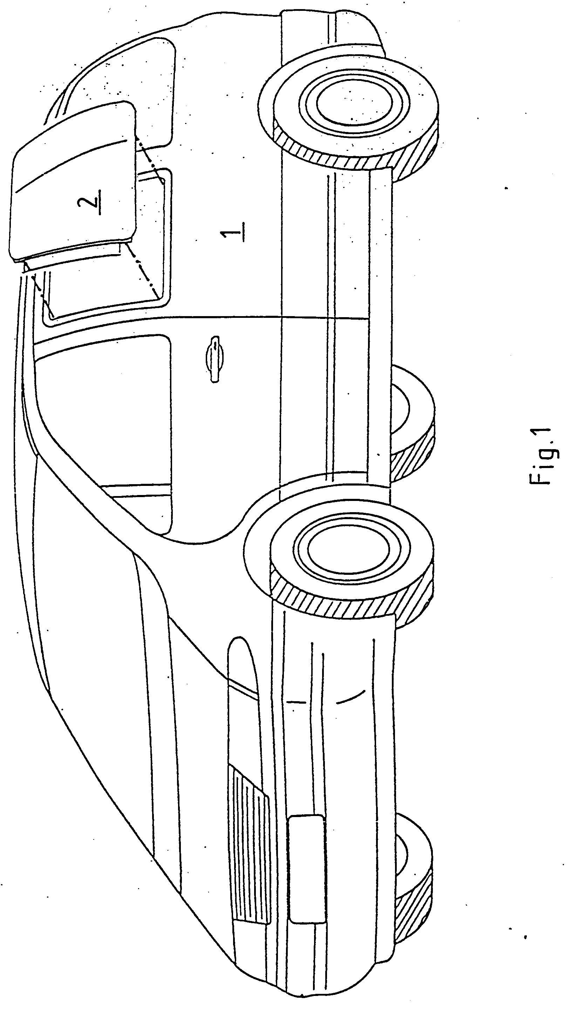

Das in der Figur 1 dargestellte Fahrzeug ist eine als Ganzes mit 1 bezeichnete Großraumlimousine. Das hinter der linken Fahrertür liegende Fahrzeugschiebefenster 2 ist andeutungsweise im ausgestellten Zustand dargestellt. Bei entsprechender Auslegung und Anpassung könnten auch die anderen Fenster der Limousine als Fahrzeugschiebefenster 2 ausgebildet sein.

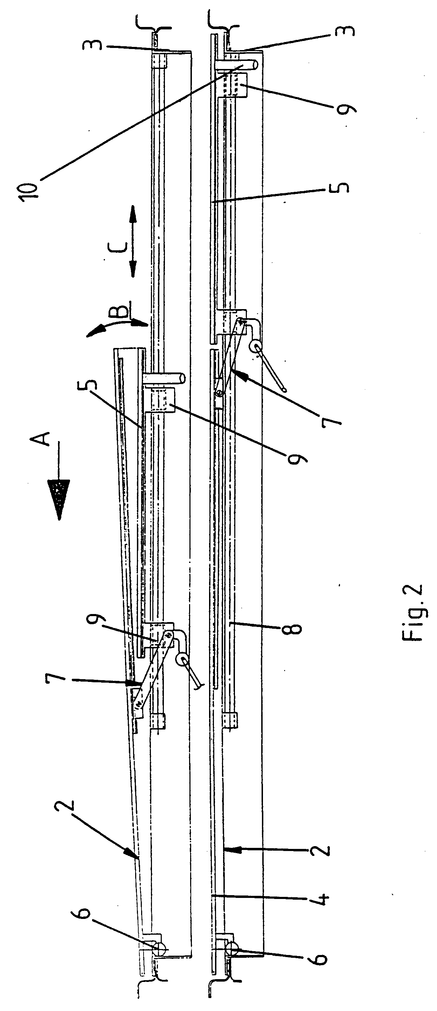

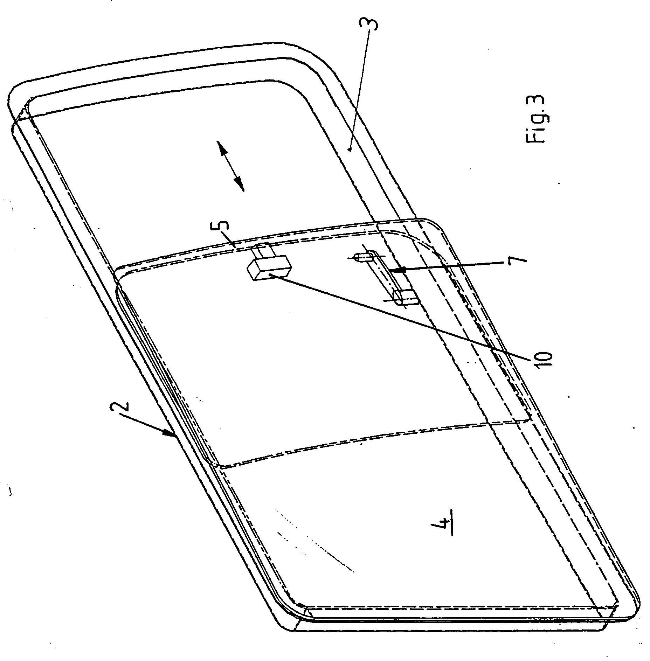

In den Figuren 2 und 3 ist in schematischer Form eine erste Ausführungsform eines solchen Fahrzeugschiebefenster dargestellt. An den seitlichen Karosserieteilen ist ein im Querschnitt winkelförmiger Grundrahmen 3 festgelegt. Das Fahrzeugschiebefenster 2 umfaßt eine vordere Scheibe 4 und eine hintere Scheibe 5. In der unteren Darstellung ist das Fenster in der geschlossenen Stellung gezeichnet. Dabei liegen die beiden Scheiben 4, 5 in einer Ebene fluchtend zueinander. Die Vorwärtsfahrtrichtung der Großraumlimousine 1 ist durch den Pfeil A in der Figur 2 gekennzeichnet. Die vordere Scheibe 4 ist um eine vorn liegende, vertikale Achse 6 verschwenkbar und damit um diese Achse ausstellbar. Diese ausgestellte Stellung ist in der oberen Darstellung gezeichnet. Die Schwenkbewegung ist in Fig. 2 durch den Doppelpfeil B angedeutet. An der der Drehachse 6 gegenüberliegenden Seite ist die Scheibe 4 mit einem als Ganzes mit 7 bezeichneten Ausstellbeschlag ausgerüstet, der vom Fahrzeuginneren her zu betätigen ist. Der Ausstellbeschlag 7 ist auf einer Führungsstange 8 verschiebbar. Alternativ dazu ist es auch möglich, den Beschlag 7 am Trägerrahmen selbst unverschiebbar zu befestigen.

In der ausgestellten Stellung der vorderen Scheibe 4 wird der Ausstellbeschlag 7 zur Achse 6 hin verfahren. Die hintere Scheibe 5 ist ebenfalls auf der Führungsstange 8 verschiebbar. Dazu ist sie innenseitig mit Lagerböcken 9 versehen. An der der vorderen Scheibe 4 ab-gewandten Seite ist sie außerdem innenseitig mit einem Schiebegriff 10 ausgerüstet. Die Länge der vorderen Scheibe 4 ist in etwa doppelt so groß wie die Länge der hinteren Scheibe 5. Die Scheibenabmessungen können selbstverständlich auch in einem anderen Verhältnis zueinander stehen. Dadurch besteht die Möglichkeit, daß nach dem Ausstellen der vorderen Scheibe 4 die hintere Scheibe 5 in Richtung zur Achse 6 hin soweit verfahren werden kann, daß die beiden hinteren Enden der Scheiben 4, 5 auf gleicher Höhe nebeneinander stehen. Dadurch wird eine Lüftungsöffnung geschaffen, die der Größe der hinteren Scheibe 5 entspricht. Es ergibt sich aus der Figur 2 von selbst, daß bei diesem Beispiel nur die vordere Scheibe 4 eine Ausstellbewegung ausführen kann, um einen Lüftungsschlitz von relativ geringer Breite zu bilden, während die hintere Scheibe 5 in Pfeilrichtung C hin und her verschiebbar ist.

Die Figur 3 zeigt eine der Darstellung nach der Figur 2 in perspektivischer Darstellung bei geöffnetem Fahrzeugschiebefenster 2 gem. der oberen Darstellung in der Figur 2. Aus Gründen der vereinfachten Darstellung sind die Führungsstange 8 sowie die Lagerböcke 9 in Fig. 3 nicht dargestellt.

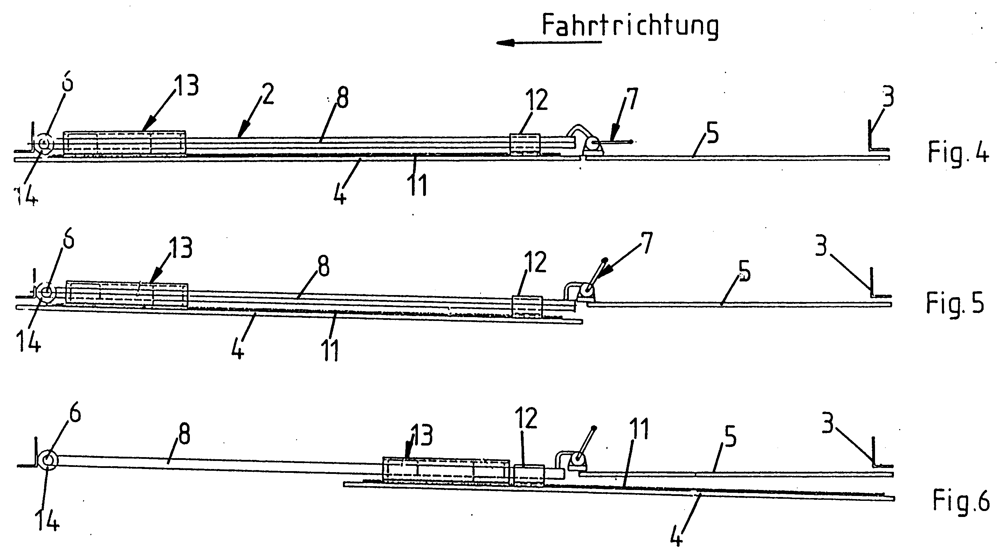

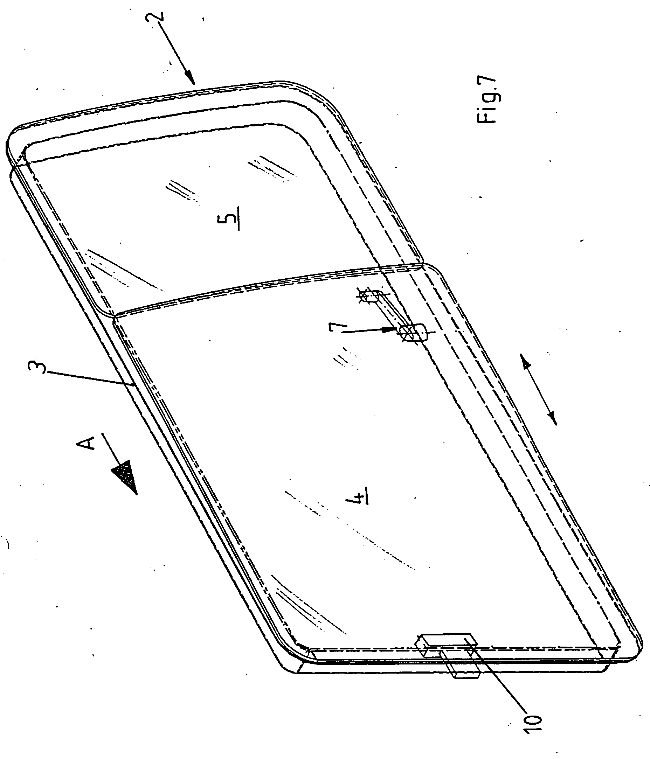

In den Figuren 4 - 8 ist eine zweite Ausführung des erfindungsgemäßen Fahrzeugschiebefensters 2 dargestellt. In diesen Figuren sind die gleichen Bauteile durch die gleichen Bezugszeichen gekennzeichnet. Auch dieses Fahrzeugschiebefenster kann asymmetrisch in der Form 10 geteilt sein, so daß die Länge der vorderen Scheibe 4 doppelt oder annähernd doppelt so groß ist wie die Länge der hinteren Scheibe 5. Hier ist die vordere Scheibe 4 mittels eines Ausstellbeschlages 7 ausstellbar. Die hintere Scheibe 5 ist unbeweglich an der Karosserie befestigt. Die Führungsstange 8, die auch Teil eines aus Rundstäben gefertigten Rahmens sein kann, folgt der Ausstellbewegung der vorderen Scheibe 4. Am unteren, gegebenenfalls auch am oberen Rand der Scheibe 4 ist eine Führungsschiene 11 befestigt. Die Führungsschiene 11 ist in einem ortsfesten Führungsschienenhalter 12 geführt. Auf der Führungsstange 8 ist außerdem eine Scheibenaufnahme 13 verschiebbar angeordnet, die im wesent-lichen aus zwei endseitigen Buchsen und einer Aufnahme für die Führungsschiene 11 besteht. Die Figur 4 zeigt die Schließlage der beiden Scheiben 4 und 5. In dieser Stellung stehen beide Scheiben wieder fluchtend zueinander. Durch Betätigen des Ausstellbeschlages 7 wird die vordere Scheibe 4 nach außen ausgestellt, so daß die beiden Scheiben 4, 5 in einem Winkel zueinander stehen. Am vorderen Rand der vorderen Scheibe 4 ist wiederum ein Schiebegriff 10 angeordnet, die vordere Scheibe 4 entgegen der Vorwärtsfahrtrichtung nach hinten zu verschieben, um dadurch eine Lüftungsöffnung zu bilden.

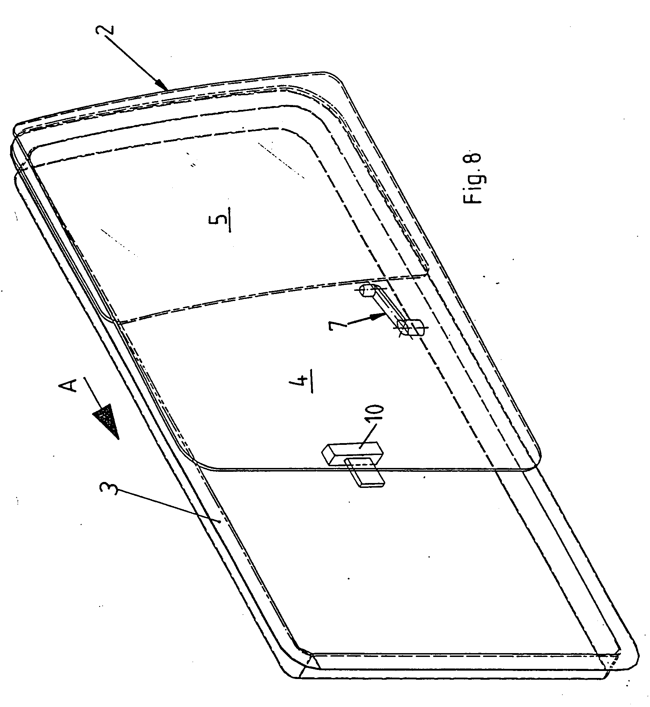

Die Figur 5 zeigt die ausgestellte Stellung der Scheibe 4, während die Figur 6 die geöffnete Stellung zeigt, in der der hintere Bereich der vorderen Scheibe 4 nach außen gegenüber der hinteren Scheibe 5 versetzt ist. Die hintere Scheibe 5 ist bei dem Ausführungsbeispiel gem. der Figur 4 - 8 ortsfest, d.h. sie kann weder ausgestellt noch verschoben werden.

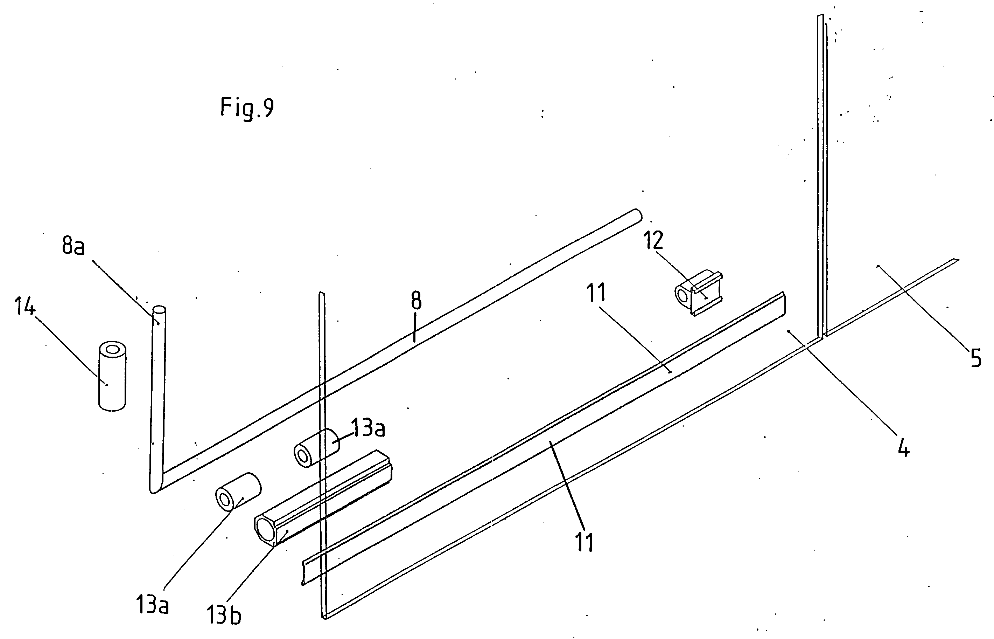

Die Figuren 7 u. 8 zeigen das Fahrzeugschiebefenster 2 der vorbeschriebenen Ausführung in perspektivischer Darstellung. Die Figur 7 zeigt die ausgestellte Stellung, die Figur 8 die geöffnete Stellung. Aus Gründen der vereinfachten Darstellung ist die Führungsstange 8 nicht dargestellt. Die Vorwärtsfahrtrichtung ist durch den Pfeil A gekennzeichnet. Aus der Figur 8 ergibt sich, daß die Größe der Öffnung in etwa der Größe der hinteren ortsfesten Scheibe 5 entspricht.

Die Figuren 9 - 11 zeigen die komplette vordere Scheibe 4 mit den Zugehörigen Beschlagteilen. Die Scheibenaufnahme 13 besteht aus den beiden äußeren Linearbuchsen 13 a und der dazwischenliegenden Aufnahmebuchse 13 b.

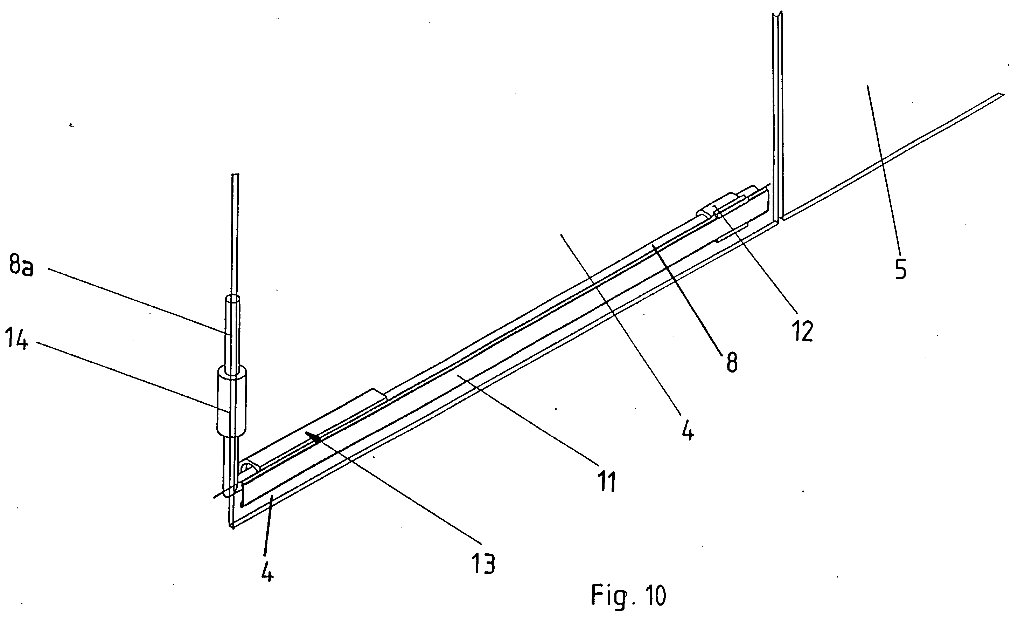

Die Figur 10 zeigt, daß die Scheibenaufnahme 13 auf der Führungsstange 8 verschiebbar ist. Im hinteren Bereich der vorderen Scheibe 4 ist der Führungsschienenhalter 12 angeordnet. Außerdem zeigt die Figur 10, daß die Führungsschiene 11 in nicht näher erläuterter Weise am Rand der vorderen Scheibe 4 festgelegt ist. Die Führungsstange 8 kann Teil eines Rahmens sein, wobei der vordere vertikale Holm durch das Bezugszeichen 8 a gekennzeichnet ist. Auf den vertikalen Holm 8 a ist eine Lagerhülse 14 aufgesetzt, die an dem Grundrahmen 3 (Fig. 4 bis 6) befestigt ist. Die Mittelachse 6 der Lagerhülse 14 ist die Schwenkachse für die Ausstellbewegung der vorderen Scheibe 4.

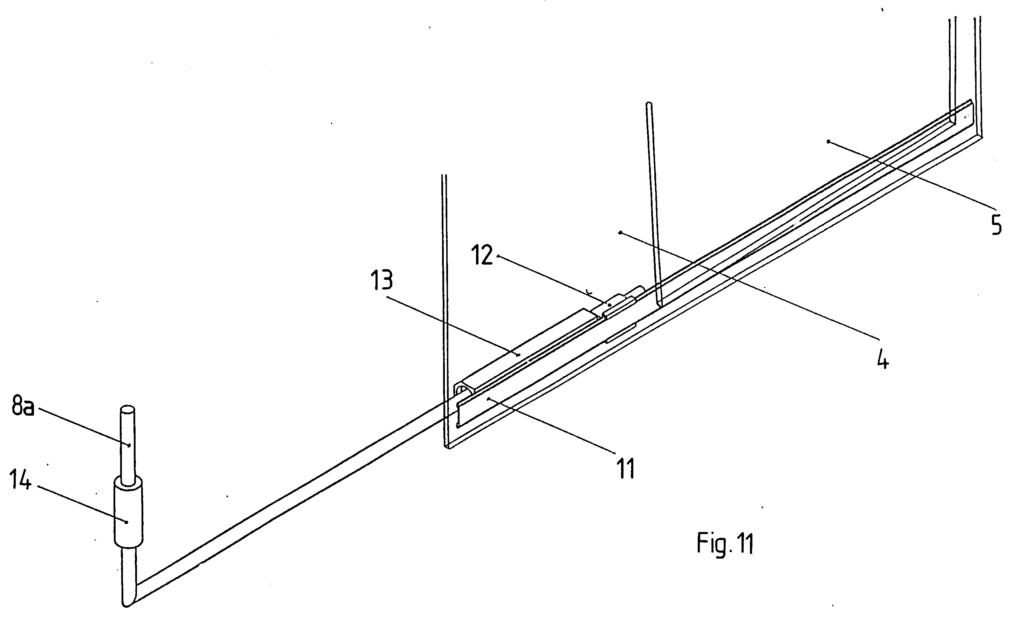

Die Figur 11 zeigt, wie die vordere Scheibe 4 seitlich neben die hintere ortsfeste Scheibe 5 geschoben werden kann. Dabei bildet der Führungsschienenhalter einen Anschlag für die Schiebebewegung, da die Scheibenaufnahme 13 dagegen schlägt. Das Schließen der jeweiligen Scheibbe 4 bzw. 5 erfolgt in der umgekehrten Reihenfolge.

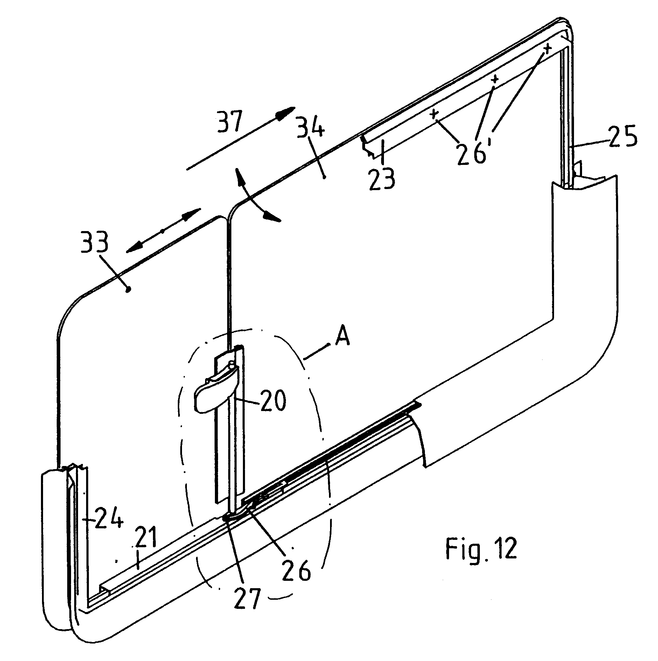

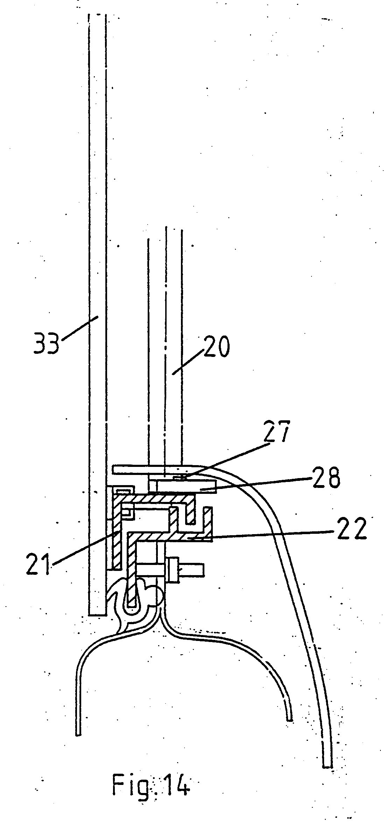

Die Figuren 12 - 18 zeigen eine weitere Ausführungsform für einen Schiebe- und Ausstellmechanismus im Detail. Da es sich dabei um eine in der Praxis bevorzugt eingesetzte Variante handelt, wird diese im folgenden näher erläutert. Da die mechanischen Funktionen mit den anderen Ausführungsbeispielen weitgehend übereinstimmen, gilt das hier gesagte insoweit auch für die anderen Varianten.

In Figur 12 umfaßt der Ausstellmechanismus eine vertikale Achse 20, die mit ihrem unteren Ende in einer Tragschiene 21 gelagert ist. An die Tragschiene 21 ist an mehreren Stellen die in Fahrtrichtung hintere Scheibe 33 angeklebt oder in anderer geeigneten Weise befestigt. Die Tragschiene 21 ist auf den unteren horizontalen Profilholm 22 so aufgesetzt, daß er auf diesem frei gleiten kann. Der Profilholm 22 bildet gleichzeitig den unteren Teil des Trägerrahmens 3. Der obere entsprechende Profilholm des Rahmens 3 ist mit 23 bezeichnet. Die seitlichen vertikalen Holme des Rahmens tragen die Bezugsziffern 24 und 25. Der Profilrahmen ist mittels Schrauben 26' an dem Rand des Karosserieausschnittes angeschraubt.

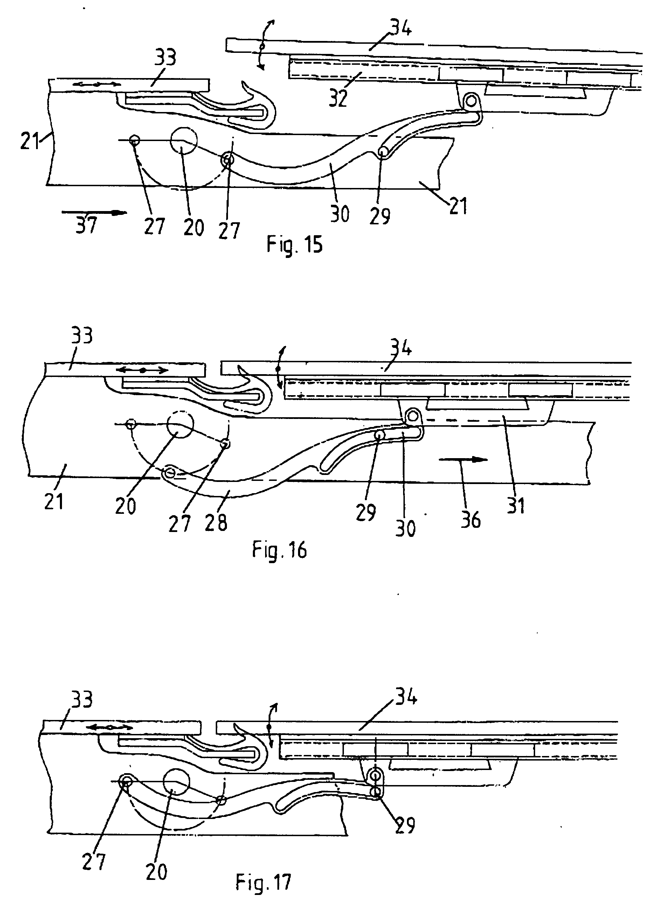

Die vertikale Achse 20, die an ihrem oberen Ende mittels einer geeigneten, nicht dargestellten Handhabe verdreht werden kann, besitzt an ihrem unteren Ende eine Nase 26, in die ein Mitnahmestift 27 eingesetzt ist, der beim Verdrehen der Achse 20 um ihre virtuelle Achse von der Nase 26 exzentrisch mitgenommen wird. Der Mitnahmestift 27 greift an dem Ende eines Kulissenhebels 28 an, der den eigentlichen Ausstellhebel bildet und mit seinem anderen Ende mit einem Führungsstift 29 gekoppelt ist, der wiederum an der Tragschiene 21 befestigt ist und nach oben hin so vorsteht, daß er in eine Nut 30 eingreift, die sich im hinteren Teil des Ausstellhebels 28 befindet. Das dem Führungsstift 29 zugeordnete Ende des Ausstellhebels 28 weist einen Gleitschuh 31 auf, der in einer Profilschiene 32 gleitet, an die das in Vorwärtsfahrtrichtung vordere Ausstellfenster 34 angeklebt ist. Der Gleitschuh 31 ist durch einen Stift 35 mit dem zugeordneten Ende des Ausstellhebels 28 verbunden. Die Ausstellbewegung der Scheibe 34 wird erreicht, indem die Achse 20 z. B. von Hand um ihre virtuelle Achse so verdreht wird, daß über den Mitnahmestift 27 der Ausstellhebel 28 und damit zwangsläufig der daran befestigte Gleitschuh 31 in Pfeilrichtung 36 (Fig. 16) verschoben wird. Durch diese Verschiebebewegung gleitet der Ausstellhebel 28 mit den Innenwänden der durch eine geeignete Bahnkrümmung angepaßten Nut 30 an dem Führungsstift 29 entlang und stellt die Ausstellscheibe 34 aus. Diese Ausstellposition, zeigt die Figur 15. Ist diese Ausstellposition erreicht, kann unmittelbar daran anschließend das in Fahrtrichtung hintere Schiebefenster 33 über eine nicht dargestellte Handhabe mit seinen zugehörigen Bau- und Funktionsteilen 20, 21 und 24 bis 29 sowie 31 in Pfeilrichtung 37 (Fig. 12, 15) verschoben werden. Dabei wird die Ausstellscheibe 34 immer weiter ausgestellt. Beim Schließen der Scheibe 33, d. h. beim Zu-rückziehen des Schiebefensters 33 in seine Geschlossenstellung wird das Ausstellfenster 34 entsprechend zunehmend weiter zugestellt, bis es die in Fig. 15 gezeigte Position eingenommen hat.

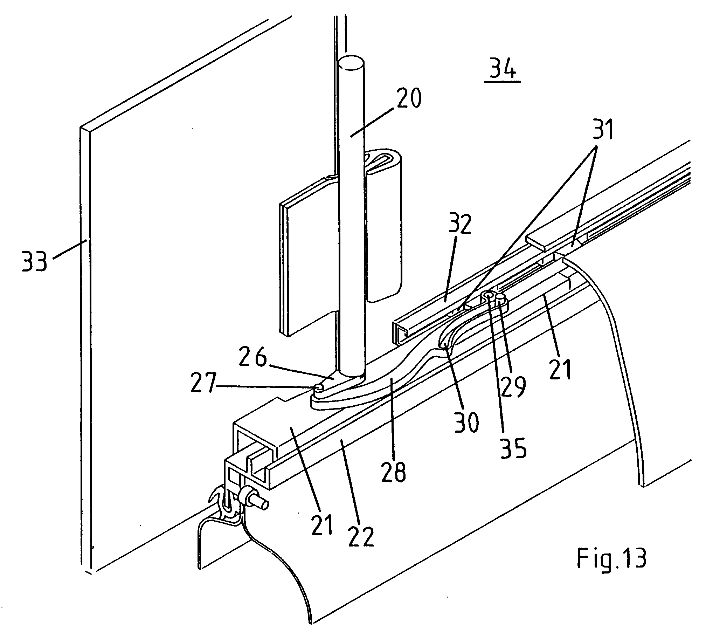

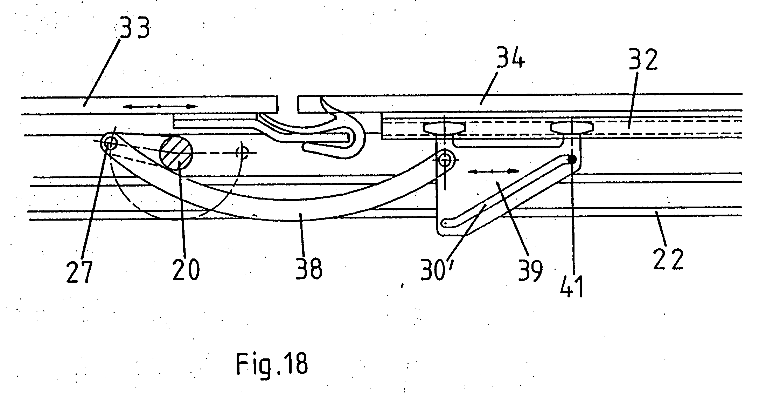

Die Figur 18 zeigt eine Ausführungsform für einen Ausstellmechanismus, bei dem statt des Ausstellhebels 28 in den Figuren 12 - 17 ein abgewandelter Ausstellhebel 38 vorgesehen ist, der mit seinem der Ausstellscheibe 34 zugewandten Ende an einem Gleitschuh 39 angelenkt ist, der eine Nut 30' aufweist, in der ein Stift 41 gleitet, der die Funktion des Führungsstiftes 29 aus Fig. 13 hat. Ansonsten sind die Bewegungsabläufe zwischen der Variante nach Fig. 13 und der Ausführung nach Fig. 18 entsprechend. Soweit gleiche Teile verwendet werden, stimmen die Bezugszeichen mit denen nach Fig. 13 überein.

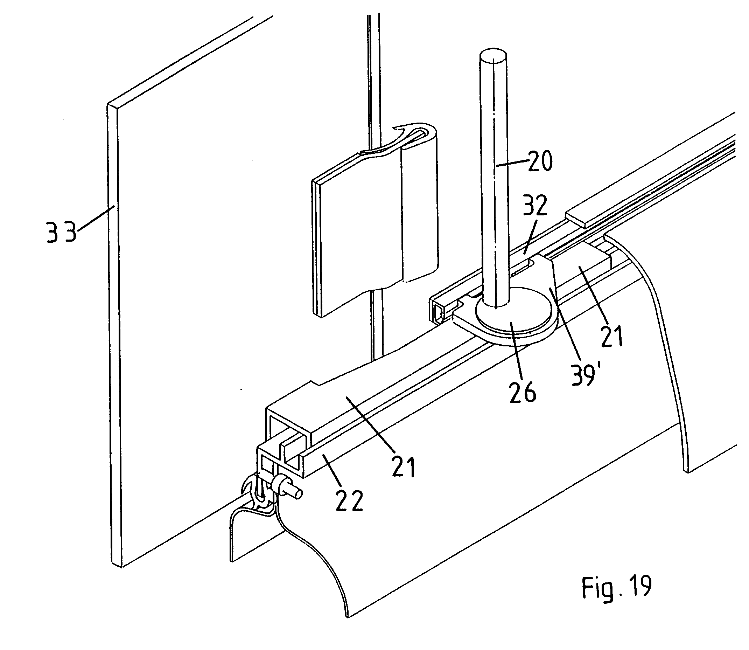

Entsprechendes gilt für die Variante nach Fig. 19, in der die Nase 26 aus Fig. 13 unmittelbar an einem Gleitschuh 39' angreift und so eine exzentrische Bewegung auslöst. Der Gleitschuh gleitet in der Führungsschiene 32 entlang.

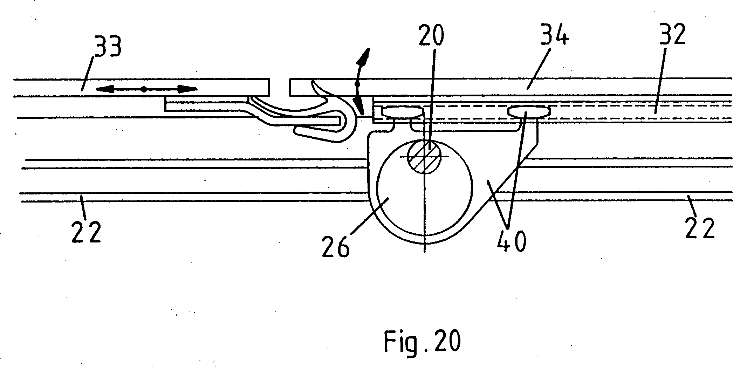

Figur 20 stellt eine teilweise geschnittene Draufsicht auf die Ausführung von Fig. 19 dar.

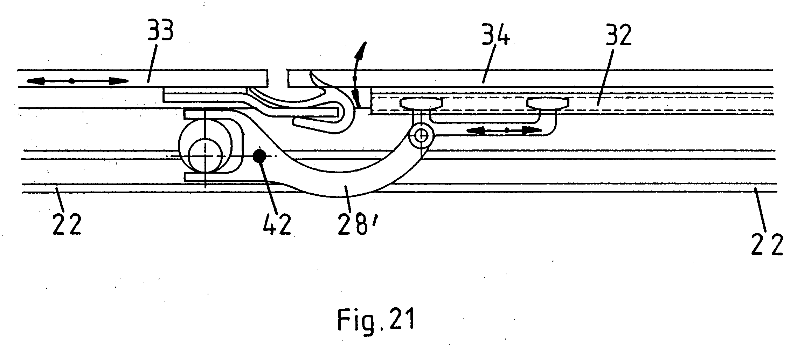

Bei der Abwandlung von Fig. 21 ist das der Scheibe 33 zugeordnete Ende des Ausstellhebels gegenüber den anderen vorbeschriebenen Ausführungen geändert worden. Auch wurde der Drehpunkt 42 für den Ausstellhebel 28' verlagert.

Selbstverständlich ist es im Rahmen der Erfindung auch möglich, das Erfindungsprinzip bei ausstellbaren Schiebedeckeln anzuwenden, die sich in der Dachhaut eines Fahrzeugs befinden. Ebenso ist es denkbar, das erfindungsgemäße Ausstellfenster statt über eine feststehende Scheibe, wie in den Figuren 4 - 6 dargestellt, unmittelbar nach außen auszustellen und über die Karosserie hinweg zu schieben. In diesem Fall kann die gleiche Mechanik verwendet werden, wie bei den vorstehend beschriebenen Ausführungsbeispielen.

## Patentansprüche

1. Fahrzeugschiebefenster, das in eine Öffnung von Seitenteilen einer Fahrzeugkarosserie und / oder in die Fahrzeugtüren einsetzbar ist, wobei das Fahrzeugschiebefenster (2) zwei in der Schließlage zueinander in einer Ebene fluchtend stehende Scheiben (4, 5) aufweist, die in Vorwärtsfahrtrichtung vordere Scheibe (4) um eine vertikale oder leicht gegen die Vertikale geneigte Achse nach außen ausstellbar ist, dadurch gekennzeichnet, daß die in Fahrtrichtung hintere Scheibe (5) des Fahrzeugschiebefensters (2) ortsfest angeordnet und die in Fahrtrichtung vordere Scheibe (4) im ausgestellten Zustand derart horizontal verfahrbar angeordnet ist, daß sie in der Offenstellung zumindest bereichsweise seitlich neben der Außenseite der hinteren ortsfesten Scheibe (5) steht.

2. Fahrzeugschiebefenster nach Anspruch 1, dadurch gekennzeichnet, daß das Fahrzeugschiebefenster (2) durch die vordere und hintere Scheibe (4, 5) in der Schließlage der Scheiben (4, 5) symmetrisch oder asymmetrisch geteilt ist, wobei die Länge bei der asymmetrischen Teilung die Länge der in Fahrtrichtung hinteren Scheibe (5) geringer sein kann als der vorderen Scheibe (4).

3. Fahrzeugschiebefenster nach Anspruch 2, dadurch gekennzeichnet, daß bei der asymmetrischen Teilung die Längen der vorderen Scheibe (4) zur hinteren Scheibe (5) in einem Verhältnis im Bereich von 2:1 stehen.

4. Fahrzeugschiebefenster nach Anspruch 1, dadurch gekennzeichnet, daß die Scheiben (4, 5) an einem in die Öffnung der Karosserie oder der Tür einsetzbaren äußeren Rahmen befestigt sind.

5. Fahrzeugschiebefenster nach Anspruch 4, dadurch gekennzeichnet, daß der Rahmen aus Stäben oder Profilholmen (8, 22) derart angepaßten Querschnitts besteht, daß die Stäbe bzw. Holme gleichzeitig als Führung beim Verschieben der Scheibe dienen.

6. Fahrzeugschiebefenster nach Anspruch 5, dadurch gekennzeichnet, daß der in Fahrtrichtung vordere vertikale Profilholm (8 a) des Ausstellrahmens in wenigstens einer Lagerhülse (14) gelagert ist.

7. Fahrzeugschiebefenster nach Anspruch 5, dadurch gekennzeichnet, daß zumindest an dem unteren horizontalen Profilholm (8) des Rahmens eine in Längsrichtung des Holmes verschiebbare Scheibenaufnahme (13) gelagert ist.

8. Fahrzeugschiebefenster nach Anspruch 7, dadurch gekennzeichnet, daß die Scheibenaufnahme (13) aus zwei endseitigen Linearbuchsen (13 a) und einer dazwischen liegenden Aufnahmebuchse (13 b) besteht.

9. Fahrzeugschiebefenster nach Anspruch 7, dadurch gekennzeichnet, daß als Scheibenaufnahme (13) eine auf dem horizontalen Profilholm (8 a) hin- und herverschiebbare Profilschiene vorgesehen ist.

10. Fahrzeugschiebefenster nach einem oder mehreren der Ansprüche 1 - 9, dadurch gekennzeichnet, daß die Ausstellvorrichtung für die Scheibe (34) eine an dem in Vorvärtsfahrtrichtung (37) vorderen Ende der hinteren Scheibe (33) an einer Profilschiene (21) verdrehbar gelagerte Achse (20) umfaßt, die mit einem Ausstellhebel (28, 38) in Wirkverbindung steht, der mit seinem anderen Ende über eine Zwangsführung (29) die Ausstellhebelbewegung auf die in Fahrtrichtung vordere Scheibe (34) überträgt.

11. Fahrzeugschiebefenster nach Anspruch 10, dadurch gekennzeichnet, daß der Ausstellhebel (28) eine Nut (30) aufweist, in der ein Führungsstift (29) zwangsgeführt ist, und daß das in Fahrtrichtung vordere Ende des Ausstellhebels (28) unter Zwischenschaltung eines Gleitschuhs (31) oder dergleichen verschiebbar in einer die Ausstellscheibe (34) tragenden Profilschiene (32) gelagert ist.

12. Fahrzeugschiebefenster nach den Ansprüchen 10 und 11, dadurch gekennzeichnet, daß die Achse (20) mittels einer Nase (26) an dem Ausstellhebel (28) angreift.

13. Fahrzeugschiebefenster nach einem der Ansprüche 10 - 12, dadurch gekennzeichnet, daß der Drehwinkel der Achse (20) kleiner ist als 270 °.

14. Fahrzeugschiebefenster nach einem oder mehreren der Ansprüche 10 - 13, dadurch gekennzeichnet, daß der Ausstellhebel (38) an einem Ende an der Nase (26) der Achse (20) und mit seinem anderen Ende an einem Gleitschuh (39) gelenkig angreift, und daß zwecks Erhalts einer Zwangsführung für die Ausstellbewegung der Scheibe (34) eine Führungsnut (30') in dem Gleitschuh (39) vorgesehen ist, in die der Führungsstift (41) eingreift.

15. Fahrzeugschiebefenster nach einem der Ansprüche 1 - 10, dadurch gekennzeichnet, daß die Nase (26) unmittelbar an einem Führungsschuh (39') gelagert ist.

16. Fahrzeugschiebefenster nach einem oder mehreren der Ansprüche 11 - 15, dadurch gekennzeichnet, daß der Drehpunkt (42) für den Ausstellhebel (28') veränderbar ist.

17. Fahrzeugschiebefenster nach einem oder mehreren der Ansprüche 1 - 16, dadurch gekennzeichnet, daß der Ausstellbeschlag (7) an dem Trägerrahmen (5) angeordnet ist.

18. Fahrzeugschiebefenster nach einem oder mehreren der Ansprüche 1 - 16, dadurch gekennzeichnet, daß der Ausstellbeschlag (7) derart an dem Schiebefenster angeordnet ist, daß er beim Verschieben der Scheibe mitgeführt wird.

19. Fahrzeugschiebefenster nach einem der Ansprüche 4 - 7, dadurch gekennzeichnet, daß die als Führung dienenden Profilholme (8) eine größere Länge aufweisen als die Länge einer einzelnen Scheibe, jedoch die Summe beider Scheibenlängen nicht unterschreiten.

20. Fahrzeugschiebefenster nach einem der Ansprüche 4 - 7, dadurch gekennzeichnet, daß die als Führung (8) dienenden Profilholmlängen der Summe beider Scheibenlängen entsprechen.

21. Fahrzeugschiebefenster nach einem der Ansprüche 4 - 7, dadurch gekennzeichnet, daß die als Führung (8) dienende Profillänge der Länge einer Scheibe entspricht, derart, daß die Führung (8) ausstellbar ist.

22. Fahrzeugschiebefenster nach einem oder mehreren der Ansprüche 1 - 21, dadurch gekennzeichnet, daß es eine einzige Scheibe umfaßt.

23. Fahrzeugschiebefenster nach einem oder mehreren der vorhergehenden Ansprüche 1 - 22, dadurch gekennzeichnet, daß die Scheibe (4) an der Schiene (11) bzw. die Scheibe (33) an der Schiene (21) befestigt ist.

24. Fahrzeugschiebefenster nach einem oder mehreren der vorhergehenden Ansprüche 1 - 23, dadurch gekennzeichnet, daß an der Scheibe (34) eine Schiene (32) befestigt ist, in der ein oder mehrere Gleitschuhe (31) verschiebbar zwangsgeführt sind, von denen zumindest ein Schuh (31) mit dem Ausstellhebel (28) gelenkig verbunden ist.

## Claims

1. A vehicle sliding window which can be inserted in an aperture in side parts of a vehicle body and/or in the vehicle doors, wherein the vehicle sliding window (2) comprises two window glasses (4, 5) which in the closed position are aligned with each other in one plane, and the window glass (4) which is in front in the direction of forward travel can be pushed outwards about a vertical axis or an axis which is slightly inclined to the vertical, characterised in that the window glass (5) of the vehicle sliding window (2) which is at the rear in the direction of travel is disposed fixed, and in its pushed-out state the window glass (4) which is in front in the direction of travel is disposed so that it can move horizontally in such a way that in the open position it is situated at least regionally at the side of and near the outside of the rear fixed window glass (5).

2. A vehicle sliding window according to claim 1, characterised in that when the window glasses (4, 5) are in the closed position the vehicle sliding window (2) is symmetrically or asymmetrically divided by the front and rear window glasses (4, 5), wherein when there is asymmetric division the length of the window glass (5) which is at the rear in the direction of travel can be less than that of the front window glass (4).

3. A vehicle sliding window according to claim 2, characterised in that when there is asymmetric division the length of the front window glass (4) to that of the rear window glass (5) is in a ratio in the region of 2:1.

4. A vehicle sliding window according to claim 1, characterised in that the window glasses (4, 5) are fixed to an outer frame which can be inserted in the aperture in the body or door.

5. A vehicle sliding window according to claim 4, characterised in that the frame consists of rods or of sectional bars (8, 22) with cross-sections which are matched to each other in such a way that the rods or bars at the same time serve as a guide when the window glass is displaced.

6. A vehicle sliding window according to claim 5, characterised in that the vertical sectional bar (8 a) of the push-out frame, which bar is in front in the direction of travel, is mounted in at least one bearing bush (14).

7. A vehicle sliding window according to claim 5, characterised in that a window glass receiver (13) which is displaceable in the longitudinal direction of the bar is mounted at least on the lower horizontal sectional bar (8) of the frame.

8. A vehicle sliding window according to claim 7, characterised in that the window glass receiver (13) consists of two linear bushings (13 a) at the ends and a receiver bushing (13 b) situated therebetween.

9. A vehicle sliding window according to claim 7, characterised in that a sectional rail which can be displaced to and fro on the sectional bar (8 a) is provided as the window glass receiver (13).

10. A vehicle sliding window according to one or more of claims 1 - 9, characterised in that the push-out device for the window glass (34) comprises a pivot (20) which is rotatably mounted on a sectional rail (21) at the end, which is in front in the direction of forward travel (37), of the rear window glass (33), which pivot is operationally connected to a push-out lever (28, 38), the other end of which push-out lever transmits the movement of the push-out lever, via a forcible guide (29), to the window glass (34) which is in front in the direction of travel.

11. A vehicle sliding window according to claim 10, characterised in that the push-out lever (28) has a slot (30) in which a guide pin (29) is forcibly guided, and that the end of the push-out lever (28) which is in front in the direction of travel is displaceably mounted in a sectional rail (32) which supports the push-out window glass (34), with a sliding shoe (31) or the like interposed therebetween.

12. A vehicle sliding window according to claims 10 and 11, characterised in that the pivot (20) acts on the push-out lever (28) by means of a projection (26).

13. A vehicle sliding window according to any one of claims 10 - 12, characterised in that the angle of rotation of the pivot (20) is less than 270 °.

14. A vehicle sliding window according to one or more of claims 10 - 13, characterised in that one end of the push-out lever (38) acts on and is articulated to the projection (26) of the pivot (20) and the other end of the push-out lever acts on and is articulated to a sliding shoe (39), and that a guide slot (30') into which the guide pin (41) fits is provided in the sliding shoe (39) for the purpose of obtaining forcible guidance for the push-out movement of the window glass (34).

15. A vehicle sliding window according to any one of claims 1 - 10, characterised in that the projection (26) is directly mounted on a guide shoe (39').

16. A vehicle sliding window according to one or more of claims 11 - 15, characterised in that the fulcrum (42) for the push-out lever (28') can be varied.

17. A vehicle sliding window according to one or more of claims 1 - 16, characterised in that the push-out fitting (7) is disposed on the supporting frame (5).

18. A vehicle sliding window according to one or more of claims 1 - 16, characterised in that the push-out fitting (7) is disposed on the sliding window so that it is entrained when the window glass is displaced.

19. A vehicle sliding window according to any one of claims 4 - 7, characterised in that the sectional bars (8) which serve as a guide have a length which is greater than the length of an individual window glass, but are not less than the sum of both window glass lengths.

20. A vehicle sliding window according to any one of claims 4 - 7, characterised in that the lengths of the sectional bars which serve as guides (8) correspond to the sum of both window glass lengths.

21. A vehicle sliding window according to any one of claims 4 - 7, characterised in that the length of the section which serves as a guide (8) corresponds to the length of a window glass, so that the guide (8) can be pushed out.

22. A vehicle sliding window according to one or more of claims 1 - 21, characterised in that it comprises a single window glass.

23. A vehicle sliding window according to one or more of the preceding claims 1 - 22, characterised in that window glass (4) is fixed to rail (11) and window glass (33) is fixed to rail (21), respectively.

24. A vehicle sliding window according to one or more of the preceding claims 1 - 23, characterised in that a rail (32) is fixed to the window glass (34), in which rail one or more sliding shoes (31) are forcibly displaceably guided, at least one shoe (31) of which is attached articulated to the push-out lever (28).

## Revendications

1. Fenêtre coulissante pour véhicule, susceptible d'être mise en place dans une ouverture des parties latérales d'une carrosserie d'un véhicule et/ou dans les portières du véhicule, la fenêtre coulissante (2) présentant deux vitres (4, 5) en alignement l'une avec l'autre dans un plan dans la position fermée, la vitre (4) avant en direction de conduite étant orientable vers l'extérieur autour d'un axe vertical ou légèrement incliné par rapport à la verticale, caractérisée en ce que la vitre (5) arrière en direction de conduite de la fenêtre coulissante (2) est agencée de façon stationnaire et la vitre (4) avant en direction de conduite est agencée de façon horizontalement mobile dans l'état orienté vers l'extérieur, de telle manière que dans la position ouverte elle se trouve du moins en partie latéralement à côté de la face extérieure de la vitre arrière stationnaire (5).

2. Fenêtre coulissante selon la revendication 1, caractérisée en ce que la fenêtre coulissante (2) est divisée symétriquement ou asymétriquement par les vitres avant et arrière (4, 5) dans la position fermée des vitres (4, 5), et dans le cas de la division asymétrique, la longueur de la vitre (5) arrière étant inférieure à celle de la vitre avant (4).

3. Fenêtre coulissante selon la revendication 2, caractérisée en ce que dans le cas de la division asymétrique, les longueurs de la vitre avant (4) par rapport à la vitre arrière (5) sont dans un rapport de l'ordre de 2 : 1.

4. Fenêtre coulissante selon la revendication 1, caractérisée en ce que les vitres (4, 5) sont fixées sur un cadre extérieur susceptible d'être mis en place dans l'ouverture de la carrosserie ou de la portière.

5. Fenêtre coulissante selon la revendication 4, caractérisée en ce que le cadre est constitué de barres ou de longerons profilés (8, 22) présentant une section transversale adaptée de telle manière que les barres ou longerons servent simultanément de guidage lors du déplacement de la vitre.

6. Fenêtre coulissante selon la revendication 5, caractérisée en ce que le longeron profilé vertical (8a) avant en direction de conduite du cadre d'orientation est monté dans au moins une douille de montage (14).

7. Fenêtre coulissante selon la revendication 5, caractérisée en ce que sur le longeron profilé horizontal inférieur (8) du cadre au moins est monté un logement de vitre (13) mobile en direction longitudinale du longeron.

8. Fenêtre coulissante selon la revendication 7, caractérisée en ce que le logement de vitre (13) est constitué de deux douilles linéaires côté extrémité (13a) et d'une douille de logement (13b) interposée entre celles-ci.

9. Fenêtre coulissante selon la revendication 7, caractérisée en ce qu'il est prévu en tant que logement de vitre (13) un rail profilé mobile en va-et-vient sur le longeron profilé horizontal (8a).

10. Fenêtre coulissante selon l'une ou plusieurs des revendications 1 à 9, caractérisée en ce que le dispositif d'orientation pour la vitre (34) comporte un axe (20) monté en rotation sur un rail profilé (21) à l'extrémité (37) avant en direction de conduite de la vitre arrière (33), ledit axe étant en liaison d'action avec un levier d'orientation (28, 38) qui transmet avec son autre extrémité le mouvement du levier d'orientation via un guidage forcé (29) à la vitre (34) avant en direction de conduite.

11. Fenêtre coulissante selon la revendication 10, caractérisée en ce que le levier d'orientation (28) présente une gorge (30) dans laquelle est guidée à force une tige de guidage (29), et en ce que l'extrémité avant en direction de conduite du levier d'orientation (28) est montée de façon mobile dans un rail profilé (32) portant la vitre orientable (34), avec interposition d'un patin coulissant (31), ou similaire.

12. Fenêtre coulissante selon les revendications 10 et 11, caractérisée en ce que l'axe (20) attaque le levier d'orientation (28) au moyen d'un bec (26).

13. Fenêtre coulissante selon l'une quelconque des revendications 10 à 12, caractérisée en ce que l'angle de rotation de l'axe (20) est inférieur à 270°.

14. Fenêtre coulissante selon l'une ou plusieurs des revendications 10 à 13, caractérisée en ce que le levier d'orientation (38) attaque avec articulation à une extrémité le bec (26) de l'axe (20) et à son autre extrémité un patin coulissant (39), et en ce que pour maintenir un guidage à force pour le mouvement d'orientation de la vitre (34), il est prévu une gorge de guidage (30') dans le patin coulissant (39), dans laquelle s'engage la tige de guidage (41).

15. Fenêtre coulissante selon l'une quelconque des revendications 1 à 10, caractérisée en ce que le bec (26) est monté directement sur un patin de guidage (39').

16. Fenêtre coulissante selon l'une ou plusieurs des revendications 11 à 15, caractérisée en ce que le centre de rotation (42) pour le levier d'orientation (28') est variable.

17. Fenêtre coulissante selon l'une ou plusieurs des revendications 1 à 16, caractérisée en ce que la ferrure d'orientation (7) est agencée sur le cadre porteur (5).

18. Fenêtre coulissante selon l'une ou plusieurs des revendications 1 à 16, caractérisée en ce que la ferrure d'orientation (7) est agencée sur la fenêtre coulissante de telle sorte qu'elle est entraînée pendant le coulissement de la vitre.

19. Fenêtre coulissante selon l'une quelconque des revendications 4 à 7, caractérisée en ce que les longerons profilés (8) servant de guidage présentent une longueur qui est supérieure à celle d'une vitre individuelle, mais qui n'est pas inférieure à la somme des deux longueurs de vitre.

20. Fenêtre coulissante selon l'une quelconque des revendications 4 à 7, caractérisée en ce que les longueurs des longerons profilés servant de guidage (8) correspondent à la somme des deux longueurs de vitre.

21. Fenêtre coulissante selon l'une quelconque des revendications 4 à 7, caractérisée en ce que la longueur de profilé servant de guidage (8) correspond à la longueur d'une vitre, de telle sorte que le guidage (8) est orientable.

22. Fenêtre coulissante selon l'une ou plusieurs des revendications 1 à 21, caractérisée en ce qu'elle comporte une seule vitre.

23. Fenêtre coulissante selon l'une ou plusieurs des revendications 1 à 22, caractérisée en ce que la vitre (4) est fixée sur le rail (11), ou respectivement la vitre (33) sur le rail (21).

24. Fenêtre coulissante selon l'une ou plusieurs des revendications 1 à 23, caractérisée en ce qu'un rail (32) est fixé sur la vitre (34), dans lequel un ou plusieurs patins coulissants (31) sont guidés à force en déplacement, parmi lesquels au moins un patin (31) est relié avec articulation au levier d'orientation (28).
